# EUROPEAN PATENT APPLICATION

(11) **EP 2 863 180 A1**
(43) Date of publication of application: **22.04.2015**
(21) Application number: 13194387.0
(22) Date of filing: 26.11.2013
(51) Int. Cl.: G01C 21/32

(54) **Apparatus and method for partially updating a navigation data while driving**

(30) Priority: 21.10.2013 KR 20130125185; 04.11.2013 KR 20130133039
(71) Applicant: Realtimetech Co., Ltd., Daejeon 305-510 (KR)
(72) Inventor: Kim, Jae Kwang, 305-301 Daejeon (KR); Han, Hyeok, 305-770 Daejeon (KR); Jin, Seong Il, 305-762 Daejeon (KR)
(74) Representative: Gille Hrabal

(57) **Abstract**

The present invention relates to an apparatus and method for partially updating a navigation data without interrupting route guide service while a navigation apparatus based on a database provides the service. The apparatus for partially updating a navigation data while driving according to the present invention includes a database file (40) stored in a storage medium; a log file (50) stored in the storage medium; a core module (30a, 30b) for supporting record or access of data into or from the database file (40) and the log file (50); an update manager (20) for storing a data for updating the database file (40) into the log file (50) using the core module (30a, 30b); and a route guide manager (10) for accessing the data stored in the database file (40) using the core module (30a, 30b) and providing a route guide service, in which the core module (30a, 30b) includes a restoration manager (32a, 32b) for performing log file creation and log record in response to a request of the update manager (20), being activated only while migration occurs from the log file (50) to the database file (40), and reading a data from the log file (50) in response to a request of the route guide manager (10) in the case of a changed data.

## Description

### BACKGROUND OF THE INVENTION

### Field of the Invention

The present invention relates to an apparatus and method for partially updating a navigation data without interrupting route guide service while a navigation apparatus based on a database provides the service.

### Background of the Related Art

Since a conventional navigation apparatus employs a method of updating the whole data in a block in order to update navigation data based on a file, it takes a lot of time.

If the navigation data is managed based on a database, the update time can be greatly reduced by employing a partial update method of an object unit.

In addition, if the navigation data is updated while the navigation apparatus provides a route guide service, the route guide service should be interrupted to maintain consistency of the data. Particularly, in the method of partially updating the navigation data, data update may frequently occur while the navigation apparatus provides the route guide service, and thus inconvenience of users may be aggravated due to the frequent data update.

### SUMMARY OF THE INVENTION

Therefore, the present invention has been made in view of the above problems, and it is an object of the present invention to provide an apparatus and method for partially updating a navigation data without interrupting route guide service while providing the service by changing a state of a route guide manager to maintain consistency of the data while an update manager performs an update operation through a communication between the route guide manager and the update manager.

To accomplish the above object, according to one aspect of the present invention, there is provided an apparatus for partially updating a navigation data while driving, the apparatus including: a database file stored in a storage medium; a log file stored in the storage medium; a core module for supporting record or access of data into or from the database file and the log file; an update manager for storing a data for updating the database file into the log file using the core module; and a route guide manager for accessing the data stored in the database file using the core module and providing a route guide service, in which
the core module includes a restoration manager for performing log file creation and log record in response to a request of the update manager, being activated only while migration occurs from the log file to the database file, and reading a data from the log file in response to a request of the route guide manager in the case of a changed data.

In the apparatus for partially updating a navigation data while driving, the core module further includes: a user callback function for performing communication between the route guide manager and the update manager and informing the route guide manager of a start time (MIGCB_MIGRATION_BEFORE) and an end time (MIGCB_MIGRATION_AFTER) of the migration; and a user API restartupSystem for providing an effect of rebooting the core module by means of a call of the route guide manager at the start time and the end time of the migration.

In the apparatus for partially updating a navigation data while driving, the core module further includes a user API setUserCallbackFunc for registering the user callback function after the update manager is driven.

According to another aspect of the present invention, there is provided a method of partially updating a navigation data while driving, the method including the steps of: driving a route guide manager, and providing a route guide service by accessing data stored in a database file using a core module; driving an update manager, performing an update operation on the database file, activating a restoration manager of the core module, and creating a log file and recording a log in the created log file by the restoration manager; requesting, by a restoration manager of the update manager, the route guide manager to transit a state to 'MIGCB_MIGRATION_BEFORE', before migration from the log file to the database file is started; activating a restoration manager of the route guide manager and reading a data from the log file in the case of a changed data; requesting, by the restoration manager of the update manager, the route guide manager to transit the state to 'MIGCB_MIGRATION_AFTER', after the migration from the log file to the database file is completed; and deactivating the restoration manager of the route guide manager, and providing the route guide service by directly accessing the data stored in the database file using the core module.

In the method of partially updating a navigation data while driving, when the restoration manager of the update manager requests the route guide manager to transit the state to the 'MIGCB_MIGRATION_BEFORE' or the 'MIGCB_MIGRATION_AFTER', the restoration manager of the update manager uses a user callback function which performs communication between the update manager and the route guide manager.

In the method of partially updating a navigation data while driving, the update manager registers the user callback function using a user API setUserCallbackFunc configured in the core module, after being driven.

In the method of partially updating a navigation data while driving, if the state of the route guide manager is transited to the 'MIGCB_MIGRATION_BEFORE' or the 'MIGCB_MIGRATION_AFTER', a user API restartupSystem is called to provide an effect of rebooting the core module.

According to still another aspect of the present invention, there is provided a computer-readable recording medium for recording a program implementing a method of partially updating a navigation data while driving, the method including the steps of: driving a route guide manager, and providing a route guide service by accessing data stored in a database file using a core module; driving an update manager, performing an update operation on the database file, activating a restoration manager of the core module, and creating a log file and recording a log in the created log file by the restoration manager; requesting, by a restoration manager of the update manager, the route guide manager to transit a state to 'MIGCB_MIGRATION_BEFORE', before migration from the log file to the database file is started; activating a restoration manager of the route guide manager and reading a data from the log file in the case of a changed data; requesting, by the restoration manager of the update manager, the route guide manager to transit the state to 'MIGCB_MIGRATION_AFTER', after the migration from the log file to the database file is completed; and deactivating the restoration manager of the route guide manager, and providing the route guide service by directly accessing the data stored in the database file using the core module.

### BRIEF DESCRIPTION OF THE DRAWINGS

FIG. 1 is a view showing the entire configuration of an apparatus for partially updating a navigation data while driving according to the present invention.
FIG. 2 shows a view of driving a route guide manager after booting the navigation apparatus.
FIG. 3 shows a view of driving a first step of route guidance and partial update switch.
FIG. 4 shows a view of driving a second step of route guidance and partial update switch.
FIG. 5 shows a view of driving a third step of route guidance and partial update switch.
FIG. 6 shows a view of driving a route guide manager returned to a normal state after performing partial update.

### DESCRIPTION OF SYMBOLS

| | |
|---|---|
| 10: Route guide manager | 20: Update manager |
| 30a, 30b: Core module | 32a, 32b: Restoration manager |
| 34: User callback function | 36: User API |
| 40: Database file | 50: Log file |

### DETAILED DESCRIPTION OF THE PREFERRED EMBODIMENT

The prevent invention will be hereafter described in detail with reference to the accompanying drawings.

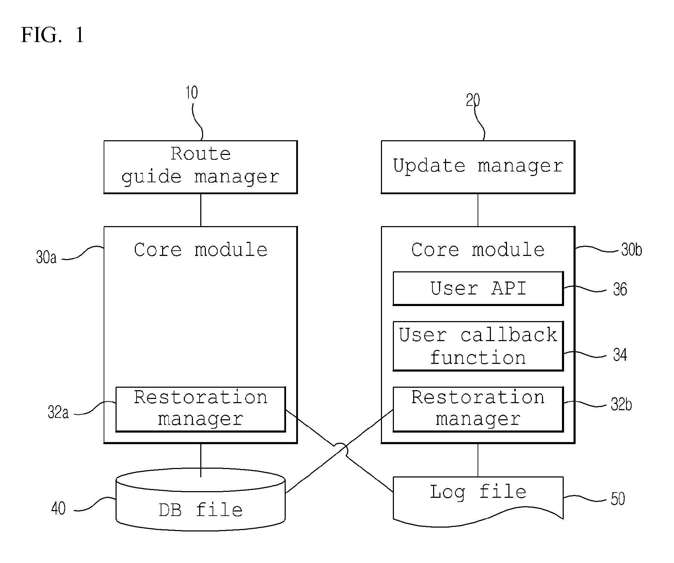

According to FIG. 1, a preferred embodiment of an apparatus for partially updating a navigation data while driving is configured to include a database file 40, a log file 50, core modules 30a and 30b respectively having a restoration manager 32a or 32b, a route guide manager 10 and an update manager 20.

The database file 40 and the log file 50, which are constitutional components of the present invention, are respectively a passive constitutional component stored in a storage medium separated from main memory. Although the storage medium used in the present invention is preferably implemented using flash memory, it is not necessarily limited thereto.

The core modules 30a and 30b, the route guide manager 10 and the update manager 20, which are constitutional components of the present invention, are respectively an active constitutional component that can be implemented as a combination of various kinds of hardware and software configuring a navigation apparatus provided in a mobile environment, and they are hereinafter defined by the functional characteristics provided by the constitutional components.

The core modules 30a and 30b are respectively a kind of database management system (DBMS) which supports record or access of data into or from the database file 40 or the log file 50.

The route guide manager 10 searches for a destination selected by a user by accessing a data stored in the database file 40 (performs only a read operation) using the core module 30a and provides a route guide service such as directing to go straight/turn to the left/turn to the right and the like.

The update manager 20 stores a data for updating the database file 40 into the log file 50 using the core module 30b and migrates the log data stored in the log file 50 to the database file 40.

The route guide manager 10 and the update manager 20 operate based on a process or a thread within a navigation apparatus, and, at this point, they respectively use the core modules 30a and 30b.

Although the core module 30a and the core module 30b are actually configured in the same file, different reference numerals are used to distinguish the core module 30a and the core module 30b since they respectively have an independent area while being combined with the route guide manger 10 and the update manager 20 at the time of operation.

The core modules 30a and 30b are provided with a user callback function 34, a user API 36, a restoration manager 32a or 32b, respectively.

The user callback function 34 performs communication between the route guide manager 10 and the update manager 20 and requests a state transition (switching) by informing the route guide manager of a start time (MIGCB_MIGRATION_BEFORE) and an end time (MIGCB_MIGRATION_AFTER) of the migration.

The user API (Application Programming Interface) 36 is an interface created for application programs to control the functions provided by the core modules 30a and 30b, and it includes setUserCallbackFunc and restartupSystem.

The setUserCallbackFunc is a user API used by the update manager 20, and the update manager 20 should register the user callback function 34 through this user API after booting the navigation apparatus.

The restartupSystem is a user interface used by the route guide manager 10, and when the route guide manager 10 changes its own state (switches), it may obtains an effect of rebooting the core module 30a through this user API.

The restoration manager 32b performs a partial update based on the log file by performing log file creation and log record in response to a request of the update manager 20, and the restoration manager 32a is activated only while migration occurs from the log file 50 to the database file 40 and performs a function of allowing an uninterrupted route guide service by reading a data from the log file in response to a request of the route guide manager 10 in the case of a changed data. Here, although the restoration manager 32a and the restoration manager 32b are also actually configured in the same file like the core modules 30a and 30b, different reference numerals are used to distinguish the restoration manager 32a and the restoration manager 32b since they respectively have an independent area while being combined with the route guide manger 10 and the update manager 20 at the time of operation.

On the other hand, the route guide manager 10 operates based on a read operation, and the update manager 20 operates based on a write operation. If these two managers simultaneously perform a task, they share an original database stored in the database file 40. At this point, it needs to provide an apparatus for maintaining consistency of data in a specific time span (a section where the original database is changed). The present invention solves this problem through a method referred to as a state transition (switching).

The switching is progressed in three stages.

A first stage is simply a state of only sharing the original database between the two managers without changing the original database.

A second stage is a state of changing the state of the route guide manager 10 to maintain consistency of data right before the original database is changed by the update manager 20.

A third stage is a state of returning the state of the route guide manager 10 to the original state right after the original database is completed to be changed by the update manager 20.

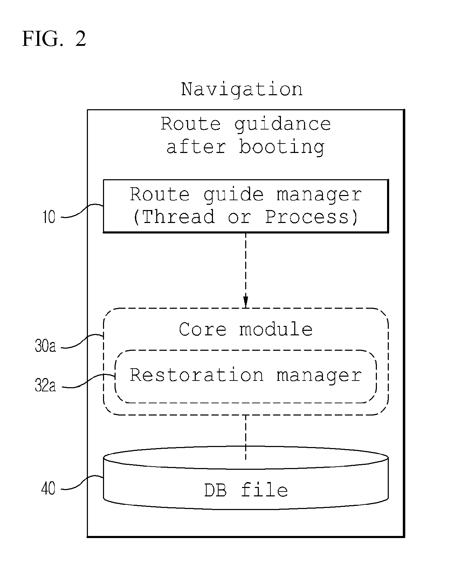

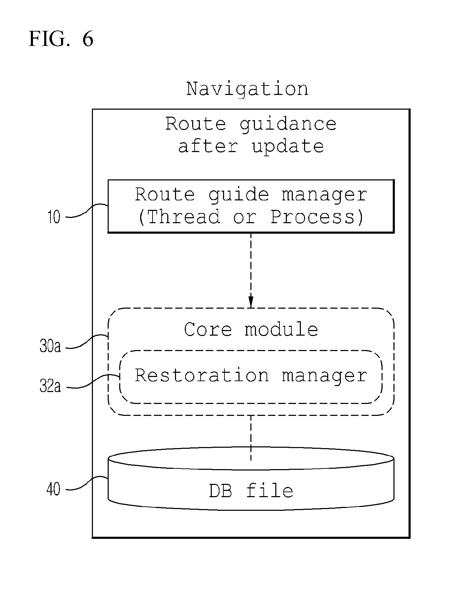

Hereinafter, a procedure of partially updating a navigation data while driving is described in detail with reference to FIGs. 2 and 6.

FIG. 2 shows a view of driving a route guide manager 10 after booting the navigation apparatus, and this will be described as follows.

First, FIG. 2 shows a connection relation of constitutional components for providing a route guide service by the route guide manager 10 after a destination of a user is set when the navigation apparatus is initially booted.

Here, only the route guide manager 10 is driven, and the update manager 20 is not driven. At this point, the restoration manager 32a is in an inactive state, and the route guide manager 10 fetches data needed for route guidance from the original database of the database file 40.

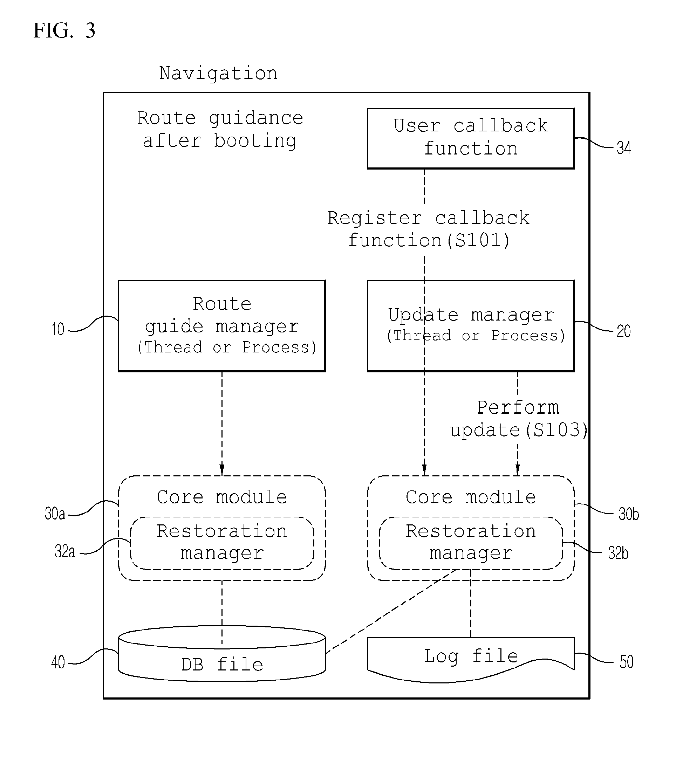

FIG. 3 shows a view of driving a first stage of route guidance and partial update switch, and this will be described as follows.

The route guide manager 10 fetches needed data from the original database and performs a service without transition of a state at all.

The update manager 20 registers the user callback function 34 in the core module 30b first of all after being driven S101. The user API setUserCallbackFunc provided by the core module 30b is used as a method for registering the user callback function.

Then, the update manager 20 performs an update operation configured of a Long Transaction S103. At this point, the restoration manager 32b is activated, and the activated restoration manager 32b creates a log file 50 and records a log in the created log file 50.

In this state, the original database is not changed.

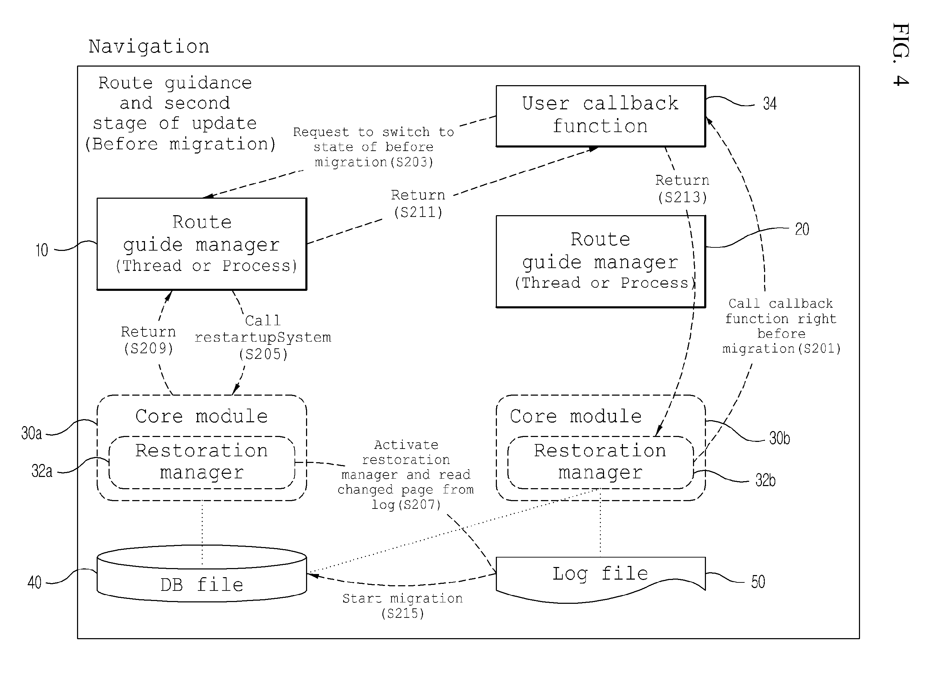

FIG. 4 shows a view of driving a second stage of route guidance and partial update switch, and this will be described as follows.

The restoration manager 32b of the update manager 20 has completed recording all change operations in the log and only needs to reflect the changes (migration) in the original database.

Here, the restoration manager 32b requests state transition of the route guide manager 10 by calling the user callback function 34 S201. A value of 'state', which is a parameter of the user callback function, is set to 'MIGCB_MIGRATION_BEFORE'.

The user callback function 34 is in charge of communication with the route guide manager 10 and requests the route guide manager 10 to switch to the state of the second stage and waits for a response S203.

The route guide manager 10 calls the user API restartupSystem. At this point, the value of parameter 'state' is set to 'MIGCB_MIGRATION_BEFORE' S205. Additionally, the core module 30a of the route guide manager 10 initializes all the data fetched and cached from the original database of the database file 40.

At this point, the restoration manager 32a of the route guide manager 10 is activated and changes the state so as to read data from the log file 50 in the case of a changed data S207. It is natural to read a data from the database file in the case of an unchanged data 40.

Then, if the user callback function 34 is returned S209, S211 and S213, the restoration manager 32b of the update manager 20 starts to reflect the changed data recorded in the log to the original database of the database file 40 S215.

Therefore, the route guide manager 10 may fetch the update completed data from the log file 50 and provide a user with a service without interrupting the service even before the migration to the original database is completed.

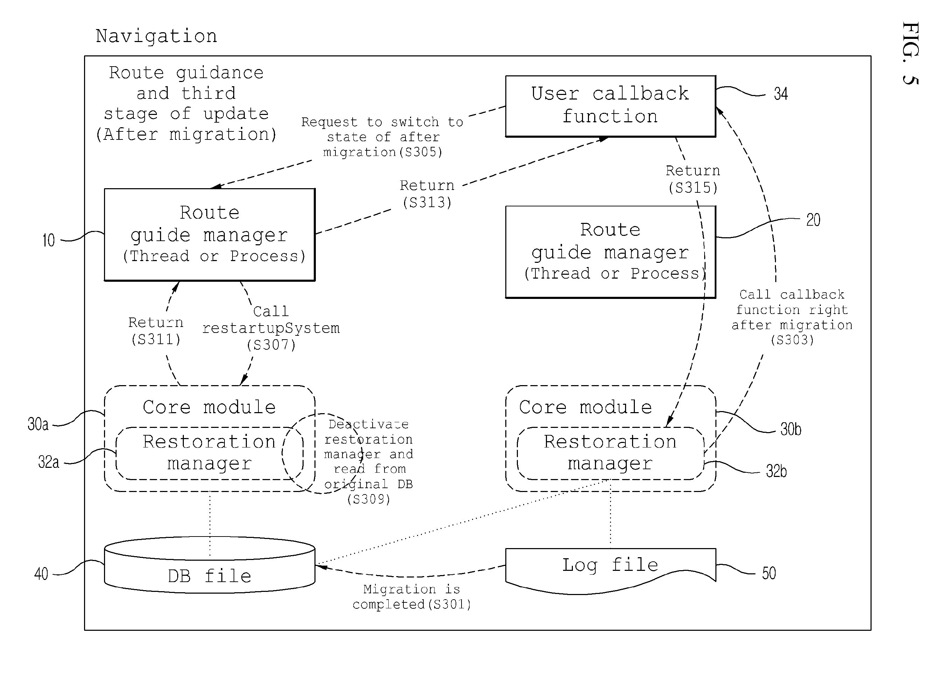

FIG. 5 shows a view of driving a third stage of route guidance and partial update switch, and this will be described as follows.

The restoration manager 32b of the update manager 20 is in a state of completing reflection of all the changed data recorded in the log file 50 to the original database and immediately before the completion of commit.

The restoration manager 32b of the update manager 20 requests state transition of the route guide manager 10 by calling the user callback function 34 S303. A value of 'state', which is a parameter of the user callback function, is set to 'MIGCB_MIGRATION_AFTER' to inform to return to the original state.

The user callback function 34 is in charge of communication with the route guide manager 10 and requests the route guide manager 10 to switch to the state of the third stage and waits for a response S305.

The route guide manager 10 calls the user API restartupSystem S307. The value of parameter 'state' is set to 'MIGCB MIGRATION AFTER'.

At this point, the restoration manager 32a of the route guide manager 10 is deactivated and changes the state so as to read data from the original database.

Then, if the user callback function 34 is returned S311, S313 and S315, the restoration manager 32b of the update manager 20 completes the commit, and all the tasks are completed.

Therefore, the route guide manager 10 may fetch data needed for route guidance from the updated original database and provide a service without interrupting the route guide service.

FIG. 6 shows a view of driving a route guide manager returned to a normal state after performing partial update, and this will be described as follows.

The update manager 20 finishes all the tasks and terminates the process.

The route guide manager 10 returns to the state of the initial booting point.

However, the user does not recognize all the processes occurring internally and may be continuously provided with the route guide service without interruption by the updated data.

Meanwhile, the embodiment of the present invention described above may be recorded in a medium used in a general-purpose computer including a mobile terminal. The medium includes recording media such as a magnetic recording medium (e.g., a ROM, a floppy disk, a hard disk or the like), an optical reading medium (e.g., a CD-ROM, a DVD and or like), an electrical recording medium (e.g., a flash memory, a memory stick or the like) and a carrier wave (e.g., transmission through the Internet).

According to the present invention described above, since the present invention employs a partial update method of an object unit by managing navigation data based on a database, the update time can be greatly reduced, and since the route guide service can be provided without interruption even while the navigation data is updated, inconvenience of navigation users may be reduced.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. An apparatus for partially updating a navigation data while driving, the apparatus comprising:
a database file stored in a storage medium;
a log file stored in the storage medium;
a core module for supporting record or access of data into or from the database file and the log file;
an update manager for storing a data for updating the database file into the log file using the core module; and
a route guide manager for accessing the data stored in the database file using the core module and providing a route guide service, wherein
the core module includes a restoration manager for performing log file creation and log record in response to a request of the update manager, being activated only while migration occurs from the log file to the database file, and reading a data from the log file in response to a request of the route guide manager in a case of a changed data.

2. The apparatus according to claim 1, wherein the core module further includes:
a user callback function for performing communication between the route guide manager and the update manager and informing the route guide manager of a start time (MIGCB_MIGRATION_BEFORE) and an end time (MIGCB_MIGRATION_AFTER) of the migration; and
a user API restartupSystem for providing an effect of rebooting the core module by means of a call of the route guide manager at the start time and the end time of the migration.

3. The apparatus according to claim 2, wherein the core module further includes a user API setUserCallbackFunc for registering the user callback function after the update manager is driven.

4. A method of partially updating a navigation data while driving, the method comprising the steps of:
driving a route guide manager, and providing a route guide service by accessing data stored in a database file using a core module;
driving an update manager, performing an update operation on the database file, activating a restoration manager of the core module, and creating a log file and recording a log in the created log file by the restoration manager;
requesting, by a restoration manager of the update manager, the route guide manager to transit a state to 'MIGCB_MIGRATION_BEFORE', before migration from the log file to the database file is started;
activating a restoration manager of the route guide manager and reading a data from the log file in a case of a changed data;
requesting, by the restoration manager of the update manager, the route guide manager to transit the state to 'MIGCB_MIGRATION_AFTER', after the migration from the log file to the database file is completed; and
deactivating the restoration manager of the route guide manager, and providing the route guide service by directly accessing the data stored in the database file using the core module.

5. The method according to claim 4, wherein when the restoration manager of the update manager requests the route guide manager to transit the state to the 'MIGCB_MIGRATION_BEFORE' or the 'MIGCB_MIGRATION_AFTER', the restoration manager of the update manager uses a user callback function which performs communication between the update manager and the route guide manager.

6. The method according to claim 5, wherein the update manager registers the user callback function using a user API setUserCallbackFunc configured in the core module, after being driven.

7. The method according to claim 4, wherein if the state of the route guide manager is transited to the 'MIGCB_MIGRATION_BEFORE' or the 'MIGCB_MIGRATION_AFTER', a user API restartupSystem is called to provide an effect of rebooting the core module.

8. A computer-readable recording medium for recording a program implementing the method of any one of claims 4 to 7.
